# EUROPÄISCHE PATENTANMELDUNG

(11) **EP 4 556 959 A1**
(43) Veröffentlichungstag der Anmeldung: **21.05.2025**
(21) Anmeldenummer: 24212490.7
(22) Anmeldetag: 12.11.2024
(51) Int. Cl.: G01S 19/30, G01S 19/37, G06N 3/063

(54) **VORRICHTUNG ZUR EXTRAKTION MINDESTENS EINES CODEMODULIERTEN TEILSIGNALS UND VERWENDUNG EINER DERARTIGEN VORRICHTUNG FÜR EIN ORTUNGSSYSTEM**

(30) Priorität: 14.11.2023 DE 102023131707
(71) Anmelder: Forschungszentrum Jülich GmbH, 52428 Jülich (DE)
(72) Erfinder: Grewing, Christian, 52428 Jülich (DE); van Waasen, Stefan, 41836 Hückelhoven (DE); Zambanini, André, 52223 Stolberg (DE)
(74) Vertreter: dompatent von Kreisler Selting Werner - Partnerschaft von Patent- und Rechtsanwälten mbB

(57) **Zusammenfassung**

Die Vorrichtung zur Extraktion mindestens eines codemodulierten Teilsignals und/oder von Information mindestens eines codemodulierten Teilsignals, wobei das Teilsignal zusammen mit mehreren verschieden codemodulierten Signalen unter Verwendung des CDMA-Verfahrens als Gesamtsignal übertragen wird, ist versehen mit einem Empfänger mit einer neuromorph inspirierten Hardware-Komponente. Der Empfänger weist einen Eingang für den Empfang des übertragenen, potenziell das zu extrahierende codemodulierte Teilsignal enthaltenen Gesamtsignals und einen Ausgang zum Ausgeben des zu extrahierenden codemodulierten Teilsignals, sofern dieses in dem Gesamtsignal enthalten ist, und die Hardware-Komponente Daten auf, die den Code des zu extrahierenden Teilsignals und/oder die zu extrahierende Information eines codemodulierten Teilsignals repräsentieren.

## Beschreibung

Die Erfindung betrifft eine Vorrichtung zur mindestens eines codemodulierten Teilsignals und/oder von Information mindestens eines codemodulierten Teilsignals, wobei das Teilsignal zusammen mit mehreren verschieden codemodulierten Signalen unter Verwendung des CDMA-Verfahrens als Gesamtsignal übertragen wird. Ferner betrifft die Erfindung die Verwendung einer derartigen Vorrichtung für ein Ortungssystem. Insbesondere betrifft die Erfindung einen neuromorph Computing inspirierten Empfänger für ein Ortungssystem.

Die Ortung eines Punktes basierend auf Ortungssystemen, die z.B. auf Basis der Messung von Laufzeitunterschieden verschiedener Signale arbeiten (Time-off-Arrival, ToA, oder Time-Difference-off-Arrival, TDoA) ist grundsätzlich bekannt. Bei den bekannten Systemen wird der Zeitunterschied typischerweise mittels eines sogenannten Rake Receiver gemessen. Die zugehörigen digitalen Schaltungen müssen eine Vielzahl verschiedener Takte mit hoher Frequenz und geringem Jitter verarbeiten. Durch die hochfrequenten und an Jitter armen Takte wird vergleichsweise hohe elektrische Leistung benötigt. Außerdem ist der Flächenbedarf für die integrierten Schaltungen auf einem ASIC vergleichsweise groß.

Aus D. C. Chen and B. J. Sheu "A compact neural-network-based CDMA receiver," IEEE Transactions on Circuits and System II: Analog and Digital Signal Processing, vol. 45, 1998, no. 3, pp. 384-387. IEEE Xplore [online]. doi: 10.1109/82.664245,In: IEEE ist ein CDMA-Empfänger bekannt, der auf Basis eines neuronalen Netzwerks arbeitet.

Weitere Frequenzsignal-Empfänger für insbesondere Satellitensignale sind bekannt aus DE-T-694 30 571, WO-A-2023/091060, US-A-2016/0217370 und US-B-6 233 230.

Aufgabe der Erfindung ist es, die Nachteile im Stand der Technik zu überwinden.

Zur Lösung dieser Aufgabe wird mit der Erfindung eine Vorrichtung zur Extraktion mindestens eines codemodulierten Teilsignals und/oder von Information mindestens eines codemodulierten Teilsignals vorgeschlagen, wobei das Teilsignal zusammen mit mehreren verschieden codemodulierten Signalen unter Verwendung des CDMA-Verfahrens als Gesamtsignal übertragen wird und wobei die Vorrichtung versehen ist mit
- einem Empfänger mit einer neuromorph inspirierten Hardware-Komponente,
- wobei der Empfänger einen Eingang für den Empfang des übertragenen, potenziell das zu extrahierende codemodulierte Teilsignal enthaltenen Gesamtsignals und einen Ausgang zum Ausgeben des zu extrahierenden codemodulierten Teilsignals, sofern dieses in dem Gesamtsignal enthalten ist, und die Hardware-Komponente Daten aufweist, die den Code des zu extrahierenden Teilsignals und/oder die zu extrahierende Information eines codemodulierten Teilsignals repräsentieren.

Die oben im Zusammenhang mit dem Stand der Technik beschriebenen Nachteile werden erfindungsgemäß überwunden, indem in dem Empfänger eines z.B. Ortungssystem eine neuromorph inspirierte Hardware-Komponente vorgesehen wird. Mit dieser Hardware-Komponente können die empfangenen Teilsignale, die gemäß des CDMA-Verfahrens (Code-Division-Multiplex-Access) als Gesamtsignal übertragen werden, auf das Vorhandensein eines oder mehrerer bekannter codemodulierter Teilsignale hin untersucht und diese Teilsignale extrahiert werden. Am Eingang des Empfängers liegt nun das übertragene Gesamtsignal an, das gegebenenfalls nach einer Vorverarbeitung (z.B. Multiplexer) der neuromorph inspirierten Hardware-Komponente zugeführt wird. Sofern sich unter den Teilsignalen des Gesamtsignals die gewünschten codemodulierten Teilsignale befinden, werden diese durch die Hardware-Komponente extrahiert und stehen am Ausgang der Hardware-Komponente und damit auch am Ausgang des Empfängers an. Anstelle eines oder mehrerer zu extrahierender codemodulierter Teilsignale kann beispielsweise auch eine gewünschte Information in einem oder mehreren der codemodulierten Teilsignale extrahiert werden. In beiden Fällen enthält die neuromorph inspirierte Hardware-Komponente Daten, die das oder die zu extrahierenden Teilsignale bzw. die zu extrahierende Information repräsentiert.

Durch den erfindungsgemäßen Ansatz ist es möglich, die Aufgaben eines Rake Receivers und/oder das Messen unterschiedlicher Zeitdifferenzen unter Anwendung neuromorph inspirierter Techniken mit wesentlich kleinerer Fläche und Leistung erreichen zu können, wobei in die dementsprechend konzipierten Halbleiterchips (CIM oder CAM Tiles) auch noch weitere Signalverarbeitungen und Filterungen integriert sein können. So kann also ein entsprechend arbeitender erfindungsgemäßer Empfänger lediglich noch eine relativ niedrige Leistungsaufnahme aufweisen.

Zur Realisierung der erfindungsgemäß eingesetzten neuromorph inspirierten Hardware-Komponente eignet sich insbesondere
- ein neuronales Netz in einer der für neuronale Netze bekannten Ausgestaltung oder
- ein Hidden Markov Modell oder
- ein Petrinetz oder automatisches Lernen jeder Art zur Generierung von Erkenntnissen aus der Vergangenheit und früheren Erfahrungen, wie z.B. maschinelles Lernen, Deep Learning und/oder einer Verarbeitung von Prädiktoren, d.h. Vorhersagevariablen aus in der Vergangenheit registrierten Ereignissen oder
- ein Crossbar-Array oder
- ein inhaltsadressierbarer Speicher

In vorteilhafter Weiterbildung der Erfindung kann vorgesehen sein, dass das durch die Hardware-Komponente zu extrahierende codemodulierte Teilsignal und/oder die Information des mindestens codemodulierten Teilsignals im Empfänger oder in einer diesem nachgeschalteten Signal- und/oder Datenverarbeitungseinheit auf die interessierende Information hin untersuchbar ist.

Bei den codemodulierten Teilsignalen kann es sich erfindungsgemäß um terrestrische Funksignale oder um Satelliten-Signale handeln. In letzterem Fall eignen sich für das erfindungsgemäße Verfahren insbesondere die Satelliten des GPS-Satellitensystems.

In vorteilhafter Ausgestaltung der Erfindung kann vorgesehen sein, dass in dem Empfänger oder in der Signal- und/oder Datenverarbeitungseinheit die Time-Off-Arrival, ToA, Information eines extrahierten codemodulierten Teilsignals und/oder die Time-Difference-off-Arrival, TDoA, Information zweier extrahierter codemodulierter Teilsignale ermittelbar ist.

Neben der zuvor beschriebenen Vorrichtung betrifft die Erfindung dann auch die Verwendung der Vorrichtung nach einer oder mehrerer zuvor genannter Ausgestaltungen für ein Ortungssystem, insbesondere für ein satellitengestütztes Ortungssystem wie z.B. mittels GPS.

Die Erfindung lässt sich auch einsetzen bei anderen Systemen zur Ortung vom Objekten wie beispielsweise LIDAR oder bei medizinischen Detektoren (PET).

## Patentansprüche

1. Vorrichtung zur Extraktion mindestens eines codemodulierten Teilsignals und/oder von Information mindestens eines codemodulierten Teilsignals, wobei das Teilsignal zusammen mit mehreren verschieden codemodulierten Signalen unter Verwendung des CDMA-Verfahrens als Gesamtsignal übertragen wird und wobei die Vorrichtung versehen ist mit
- einem Empfänger mit einer neuromorph inspirierten Hardware-Komponente,
- wobei der Empfänger einen Eingang für den Empfang des übertragenen, potenziell das zu extrahierende codemodulierte Teilsignal enthaltenen Gesamtsignals und einen Ausgang zum Ausgeben des zu extrahierenden codemodulierten Teilsignals, sofern dieses in dem Gesamtsignal enthalten ist, und
- wobei die Hardware-Komponente Daten aufweist, die den Code des zu extrahierenden Teilsignals und/oder die zu extrahierende Information eines codemodulierten Teilsignals repräsentieren.

2. Vorrichtung nach Anspruch 1, **dadurch gekennzeichnet, dass** die Hardware-Komponente
- ein neuronales Netz in einer der für neuronale Netze bekannten Ausgestaltung oder
- ein Hidden Markov Modell oder
- ein Petrinetz oder automatisches Lernen jeder Art zur Generierung von Erkenntnissen aus der Vergangenheit und früheren Erfahrungen, wie z.B. maschinelles Lernen, Deep Learning und/oder einer Verarbeitung von Prädiktoren, d.h. Vorhersagevariablen aus in der Vergangenheit registrierten Ereignissen oder
- ein Crossbar-Array oder
- einen inhaltsadressierbaren Speicher
aufweist.

3. Vorrichtung nach Anspruch 1 oder 2, **dadurch gekennzeichnet, dass** das durch die Hardware-Komponente zu extrahierende codemodulierte Teilsignal und/oder die Information des mindestens codemodulierten Teilsignals im Empfänger oder in einer diesem nachgeschalteten Signal- und/oder Datenverarbeitungseinheit auf die interessierende Information hin untersuchbar ist.

4. Vorrichtung nach einem der Ansprüche 1 bis 3, **dadurch gekennzeichnet, dass** das Gesamtsignal codemodulierte Satelliten-Teilsignale und insbesondere codemodulierte GPS-Satelliten-Teilsignale aufweist.

5. Vorrichtung nach Anspruch 4, **dadurch gekennzeichnet, dass** in dem Empfänger oder in der Signal- und/oder Datenverarbeitungseinheit die Time-Off-Arrival, ToA, Information eines extrahierten codemodulierten Teilsignals und/oder die Time-Difference-off-Arrival, TDoA, Information zweier extrahierter codemodulierter Teilsignale ermittelbar ist.

6. Verwendung der Vorrichtung nach einem der vorherigen Ansprüche für ein Ortungssystem, insbesondere für ein satellitengestütztes Ortungssystem wie z.B. mittels GPS.
